# EUROPÄISCHE PATENTSCHRIFT

(11) **EP 0 764 145 B1**
(45) Veröffentlichungstag und Bekanntmachung des Hinweises auf die Patenterteilung: **07.08.2002**
(21) Anmeldenummer: 96913498.0
(22) Anmeldetag: 09.04.1996
(51) Int. Cl.: C05F 17/02, C05F 17/00

(54) **VERFAHREN ZUR KOMPOSTIERUNG VON ORGANISCHEN STOFFEN, INSBESONDERE VON ABFÄLLEN**
METHOD OF COMPOSTING ORGANIC MATERIALS, IN PARTICULAR REFUSE
PROCEDE PERMETTANT DE FORMER DU COMPOST A PARTIR DE MATIERES ORGANIQUES, NOTAMMENT DE DECHETS

(30) Priorität: 07.04.1995 DE 19513262
(43) Veröffentlichungstag der Anmeldung: 26.03.1997
(73) Patentinhaber: Herhof-Umwelttechnik GMBH, 35606 Solms-Niederbiel (DE)
(72) Erfinder: SCHNORR, Karl-Ernst, D-35633 Lahnau (DE); SCHNORR, Carsten, D-35423 Lich (DE)
(74) Vertreter: Zinnecker, Armin, Dipl.-Ing.
(86) Internationale Anmeldenummer: EP9601532
(87) Internationale Veröffentlichungsnummer: WO9631450

(56) Entgegenhaltungen:
- EP-A- 0 092 882
- EP-A- 0 458 136
- EP-A- 0 633 235
- WO-A-90/15031
- WO-A-93/23350
- WO-A-95/13254
- DE-A- 4 124 880

## Beschreibung

Die Erfindung betrifft ein Verfahren zur Kompostierung von organischen Stoffen, insbesondere von Abfällen, bei dem die organischen Stoffe in einem geschlossenen Behälter unter Zwangsbelüftung biologisch abgebaut werden.

Derartige Verfahren sind bereits bekannt. Dabei ist es vorteilhaft, die Abluft der in dem Behälter befindlichen Masse wieder zuzuführen, also eine sogenannte Umluftführung durchzuführen. Hierdurch wird die Menge der aus dem Kreislauf zu entfernenden, an die Atmosphäre abzugebenden und deshalb vorher noch zu reinigenden Abluft reduziert. Hierdurch vermindert sich dann allerdings der Sauerstoffgehalt der durch den Behälter strömenden Luft. Um dies auszugleichen, ist bereits vorgeschlagen worden, Frischluft in den Kreislauf einzuführen (Zudosierung von Frischluft). Ferner ist vorgeschlagen worden, reinen Sauerstoff zuzudosieren.

Aus der WO-A- 93/23350 ist eine Kompostierungsanlage mit einem Belüftungssystem bekannt, das derart ausgelegt ist, daß wahlweise eine Überströmung oder Durchströmung oder Umströmung einer ruhenden oder durchmischten Schüttung durchführbar ist. Hierbei ist es möglich, variable Frischluftmengen zuzuführen und entsprechend korrespondierende Abluftmengen abzuführen. Die Zufuhr des Sauerstoffs kann so geregelt werden, daß zwischen strikter Anaerobie und strikter Aerobie alle Zustände über die Gasphase im Umluftsystem dargestellt werden können.

Aus der EP-A-458 136 ist ein Verfahren zur Kompostierung von Abfällen bekannt, bei dem eine Umluftphase durchgeführt werden kann, während der die Abluft dem Rottegut wieder zugeführt wird.

Die WO-A-95/13254 offenbart ein Verfahren zur biologischen Behandlung von Stoffen oder Stoffgemengen in geschlossenen Rottereaktoren.

Aufgabe der Erfindung ist es, das eingangs geschilderte Verfahren zu vereinfachen.

Diese Aufgabe wird durch die Merkmale des Anspruchs 1 gelöst. Die organischen Stoffe, insbesondere Abfälle, werden in einem geschlossenen Behälter unter Zwangsbelüftung biologisch abgebaut. Die Abluft wird den zu kompostierenden Stoffen in dem geschlossenen Behälter vollständig wieder zugeführt, wobei die zu kompostierenden Stoffe mit Wasser beregnet werden und kein Sauerstoff zudosiert wird. Eine Zudosierung von Sauerstoff in Form von Umgebungsluft oder reinem Sauerstoff findet also nicht statt. Hierdurch vermindert sich der Sauerstoffgehalt in der Umluft. Überraschend wurde jedoch gefunden, daß damit keine Nachteile verbunden sind. Es hat sich überraschend gezeigt, daß in dem Gas, das die zu kompostierenden Stoffe durchströmt, kein Sauerstoff enthalten sein muß. Es wurde nämlich überraschenderweise gefunden, daß der für die während der Kompostierung stattfindenden chemischen Umsetzungsprozesse erforderliche Sauerstoff von den Mikroorganismen vollständig oder doch zumindest in einem ausreichenden Ausmaß aus dem Wasser aufgenommen werden kann und daß diese Mikroorganismen hierfür keinen von außen zugeführten gasförmigen Sauerstoff benötigen.

Vorteilhafte Weiterbildungen sind in den Unteransprüchen beschrieben.

Vorteilhaft ist es, die bei der Kompostierung entstehende Wärme abzuführen. Dies geschieht vorteilhaft dadurch, daß die in der Abluft befindliche Feuchtigkeit auskondensiert wird und daß die Abluft ohne das auskondensierte Wasser wieder dem Behälter und den darin befindlichen zu kompostierenden Stoffen zugeführt wird.

Unter "Abluft", "Umluft" und "Luft" im Sine der Erfindung wird dabei auch ein Gas oder Gasgemisch verstanden, in dem der Sauerstoffgehalt geringer ist als derjenige der Umgebungsluft oder in dem überhaupt kein gasförmiger Sauerstoff mehr enthalten ist.

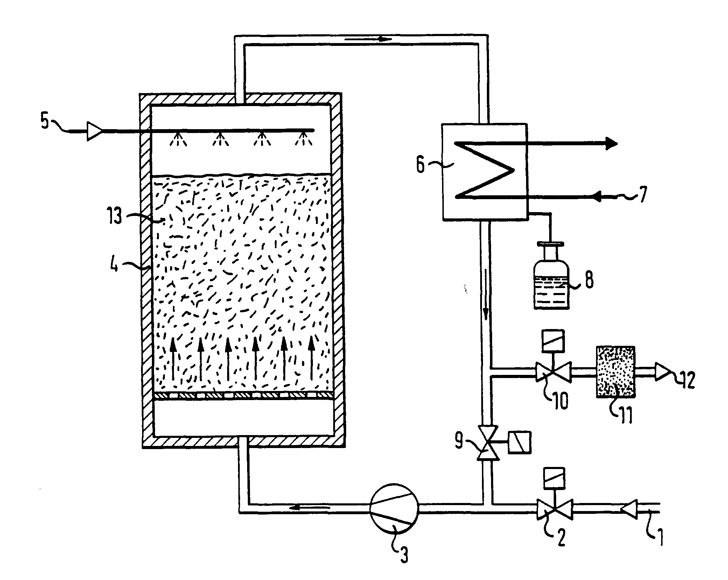

Ein Ausführungsbeispiel der Erfindung wird nachstehend anhand der beigefügten Zeichnung erläutert. In der Zeichnung zeigt die
- einzige Fig.: eine Schemazeichnung einer Anlage zur Durchführung des Verfahrens.

Abfälle 13 mit biologisch abbaubaren Bestandteilen werden in den geschlossenen Behälter 4 eingebracht. Sie liegen dort auf einem Lochboden. Durch eine Befeuchtungsanlage 5 können die Abfälle 13 von oben mit Wasser beregnet werden.

Durch ein Druckgebläse 3 wird dem unter dem Lochboden befindlichen Raum Luft zugeführt, die durch die Löcher des Lochbodens nach oben und durch die Abfälle 13 hindurchströmt und den geschlossenen Behälter 4 oben wieder verläßt. Die Abluft wird durch einen Wärmetauscher 6 geleitet, dem die Wärmetauscherflüssigkeit 7 zugeführt wird. Die in der Abluft befindliche Feuchtigkeit wird dabei auskondensiert und in dem Behälter 8 gesammelt. Die getrocknete Abluft durchströmt den Schieber 9 und gelangt durch das Druckgebläse 3 wieder in den geschlossenen Behälter 4. Durch den Schieber 2 kann Frischluft 1 zugeführt werden. Zwischen dem Wärmetauscher 6 und dem Schieber 9 zweigt eine Leitung ab, durch die die Abluft über einen weiteren Schieber 10 und einen Filter 11 ins Freie 12 abgelassen werden kann.

Im normalen Betrieb ist der Schieber 9 geöffnet und sind die Schieber 2 und 10 geschlossen. Es findet eine reine Umluftführung statt. Frischluft wird nicht zudosiert. Durch den Wärmetauscher 6 werden die bei der Kompostierung entstehende Wärme und das in der Umluft befindliche Wasser abgeführt. Der Sauerstoffgehalt sinkt kontinuierlich ab, was jedoch den Kompostierungsvorgang nicht beeinträchtigt, da der hierfür erforderliche Sauerstoff aus dem Wasser genommen wird, welches in den Abfällen als Oberflächenwasser sowie als eingeschlossenes Wasser vorhanden ist. Das Kompostierungsverfahren funktioniert auch dann, wenn der Sauerstoffgehalt in der Umluft, also in der Abluft, die dem geschlossenen Behälter 4 wieder zugeführt wird, gleich Null ist.

## Patentansprüche

1. Verfahren zur Kompostierung von organischen Stoffen, insbesondere von Abfällen (13), bei dem die organischen Stoffe in einem geschlossenen Behälter (4) unter Zwangsbelüftung biologisch abgebaut werden, bei dem die Abluft den zu kompostierenden Stoffen in dem geschlossenen Behälter (4) vollständig wieder zugeführt wird, wobei die zu kompostierenden Stoffe mit Wasser beregnet werden und kein Sauerstoff zudosiert wird.

2. Verfahren nach Anspruch 1, **dadurch gekennzeichnet, daß** die bei der Kompostierung entstehende Wärme abgeführt wird.

3. Verfahren nach Anspruch 1 oder 2, **dadurch gekennzeichnet, daß** die in der Abluft befindliche Feuchtigkeit auskondensiert wird.

## Revendications

1. Procédé de compostage de matières organiques, notamment de déchets (13), où les matières organiques sont dégradées biologiquement dans une cuve fermée (4) sous aération forcée, où l'air d'échappement est de nouveau entièrement ramené aux matières à composter dans la cuve fermée (4), où les matières à composter sont arrosées avec de l'eau et aucun oxygène n'est ajouté.

2. Procédé selon la revendication 1, **caractérisé en ce que** la chaleur produite lors du compostage est évacuée.

3. Procédé selon la revendication 1 ou 2, **caractérisé en ce que** l'humidité se trouvant dans l'air d'échappement est sortie à l'état de condensation.

## Claims

1. Process for composting organic materials, in particular waste (13), in which the organic materials are biodegraded in a closed vessel (4) with forced aeration, in which all the outgoing air is returned to the materials which are to be composted in the closed vessel (4), the materials which are to be composted being sprayed with water and no oxygen being metered in.

2. Process according to Claim 1, **characterized in that** the heat which is formed during the composting is dissipated.

3. Process according to Claim 1 or 2, **characterized in that** the moisture which is present in the outgoing air is condensed out.
